# EUROPEAN PATENT SPECIFICATION

(11) **EP 4 083 870 B1**
(45) Date of publication and mention of the grant of the patent: **12.08.2026**
(21) Application number: 21170526.4
(22) Date of filing: 26.04.2021
(51) Int. Cl.: G06N 3/08, G06N 3/0464, G06N 3/09, G06N 7/01

(54) **METHOD AND SYSTEM FOR CLASSIFYING DATA**
VERFAHREN UND SYSTEM ZUR KLASSIFIZIERUNG VON DATEN
PROCÉDÉ ET SYSTÈME DE CLASSIFICATION DE DONNÉES

(43) Date of publication of application: 02.11.2022
(73) Proprietor: TOYOTA JIDOSHA KABUSHIKI KAISHA, Toyota-shi, Aichi-ken 471-8571 (JP); Czech Technical University in Prague, 16627 Praha 6 (CZ)
(72) Inventor: CHUMERIN, Nikolay, 1140 Brussels (BE); SULC, Milan, 16627 Praha 6 (CZ); SIPKA, Tomá, 16627 Praha 6 (CZ); MATAS, Jiri, 16627 Praha 6 (CZ)
(74) Representative: Cabinet Beau de Loménie

(56) References cited:
- SAURABH GARG ET AL: "A Unified View of Label Shift Estimation", ARXIV.ORG, CORNELL UNIVERSITY LIBRARY, 201 OLIN LIBRARY CORNELL UNIVERSITY ITHACA, NY 14853, 3 October 2020 (2020-10-03), XP081777148
- REMI TACHET ET AL: "Domain Adaptation with Conditional Distribution Matching and Generalized Label Shift", ARXIV.ORG, CORNELL UNIVERSITY LIBRARY, 201 OLIN LIBRARY CORNELL UNIVERSITY ITHACA, NY 14853, 11 December 2020 (2020-12-11), XP081836246
- MILAN SULC ET AL: "Improving CNN classifiers by estimating test-time priors", ARXIV.ORG, CORNELL UNIVERSITY LIBRARY, 201 OLIN LIBRARY CORNELL UNIVERSITY ITHACA, NY 14853, 21 May 2018 (2018-05-21), XP081202150
- TOMAS SIPKA ET AL: "The Hitchhiker's Guide to Prior-Shift Adaptation", ARXIV.ORG, CORNELL UNIVERSITY LIBRARY, 201 OLIN LIBRARY CORNELL UNIVERSITY ITHACA, NY 14853, 22 June 2021 (2021-06-22), XP081993359

## Description

### Field of the disclosure

The present invention relates to the general field of automatic data processing. It relates more specifically to a method for automatically classifying data into given classes. The invention also relates to a system configured to perform said classification method.

### Description of the Related Art

Today, one of the most common uses of data is automatic classification. This tremendous success is largely due to a combination of various factors, including ever larger datasets with labelled (e.g. annotated) data used for training or inference, and ever more powerful computing resources (processing units) to manage such an amount of data.

In supervised classification tasks, sometimes the a priori probabilities of the classes from a training set do not reflect the "true" a priori probabilities of real-world data, on which a trained classifier has to be applied and which are not known at prediction time. In other words, the classification model is trained on a data set with a priori probabilities that are different from the real-world conditions.

This phenomenon is known from the art under the denomination of "prior shift" (or "label shift") and has an impact on the prediction accuracy of a classifier (e.g. neural network, logistic regression, etc.) which is designed to provide estimates of the a posteriori probabilities of the classes. This mainly results from two points:
- decision making is based on the a posteriori probabilities of the classes conditional on the observation (i.e. a class label has to be selected according to a maximum estimated a posteriori probability), and
- according to Bayes' rule, a posteriori probabilities depend in a nonlinear way on the a priori probabilities.

A change of the a priori probabilities (as is the case for the real-world data versus the training set, i.e. a prior shift) may thus have an important impact on the a posteriori probabilities, which can result in a loss of classification accuracy, in comparison with an equivalent classifier that relies on the true a priori probabilities of the new data set.

Therefore, in order to overcome this loss of accuracy, one should try to adapt the classifier so that it can take into account the true a priori probabilities. This fundamentally amounts to posing the problem, also known in the art as "prior shift adaptation", which consists in estimating the true a priori probabilities. Being able to solve this problem would allow to correct (by Bayes' rule or by retraining) the output of the classifier in order to recover the optimal decision.

Several works have been proposed so far in an attempt to address the problem of prior shift adaptation. In particular, a standard procedure for estimating true a priori probabilities based on the estimation of a confusion matrix associated with the classifier is known (see references [1],[2] and [7]).

In order to present this standard procedure in a more explicit way, and thus understand why it is problematic, some notations are now introduced.

Let us designate by M the confusion matrix of a classifier f_{T} which has been trained on a training set T to classify data (also called samples or observations) into classes c[k], k ranging from 1 to K. In a conventional way, the value in the k-th column and i-th row of M (i.e. M[i,k]) is the probability p_{T}(D=c[i]|Y=c[k]) of classifier f_{T} deciding to classify an observation in class c[i] while in fact it belongs to class c[k].

Matrix M may be used in order to infer the a priori probabilities p_{E}(Y) on a new data set E (i.e. a test set comprising real-world data as mentioned before) by solving the following system of K linear equations: ${p}_{E} \left(D=c\left[i\right]\right) = {\sum }_{k = 1}^{K} {p}_{T} \left(\left.D=c\left[i\right]\right|Y=c\left[k\right]\right) \times {p}_{E} \left(Y=c\left[k\right]\right)$ where p_{E}(D=c[i]) thus corresponds to the marginal of classifying an observation in class c[i], estimated by the class label frequency after application of the classifier f_{T} on the new data set E. In other words, p_{E}(D) stands for the probabilities of classifier f_{T} decisions.

This system of equations can also be written more compactly in the form of an equation, referred to as "equation (1)" in the rest of the description and corresponding to the following matrix multiplication: ${p}_{E} \left(D\right) = M {p}_{E} \left(Y\right)$

It results from equation (1) that the a priori probabilities p_{E}(Y) (i.e. the a priori probabilities of classes c[1],...,c[K] in set E) can be obtained by multiplying an inverse of the matrix M with p_{E}(D).

It is important to observe that equation (1) is formulated with quantities representing the true distribution p_{E}(D) and the true confusion matrix M. In other words, equation (1) is a theoretical equation which, in practice, must be considered by means of estimates of said quantities p_{E}(D) and M in order to be exploited (i.e. to solve the problem of prior shift adaptation). To do so, an estimate of p_{E}(D) can be computed by counting the classifier decisions on set E and an estimate of the confusion matrix M can be obtained from cross-tabulated classification frequencies provided by the classifier f_{T} on a validation set V.

However, working with estimates of p_{E}(D) and M is problematic when these are not consistent. Indeed, in this case, there may be no prior probability p_{E}(Y) satisfying equation (1), leading to the impossibility to provide a solution to the problem of prior shift adaptation. To illustrate this in a simple manner, consider the following example where estimates of p_{E}(D) and M are given by: $M \approx \left[\begin{matrix}0.8 & 0.2 \\ 0.2 & 0.8\end{matrix}\right] , {p}_{E} \left(D\right) \approx \left[\begin{matrix}1 \\ 0\end{matrix}\right]$

The unique solution of equation (1) considering such estimates would be: ${p}_{E} \left(Y\right) \approx \left⌈\begin{matrix}\frac{4}{3} \\ \frac{- 1}{3}\end{matrix}\right⌉$
which is clearly not acceptable given the existence of a negative value for the second component of p_{E}(Y).
SAURABH GARG ET AL: "A Unified View of Label Shift Estimation", ARXIV.ORG, CORNELL UNIVERSITY LIBRARY, 201 OLIN LIBRARY CORNELL UNIVERSITY ITHACA, NY 14853, 3 October 2020 (2020-10-03), discloses a unification of a moment-matching approach based on soft confusion matrices, and a maximum likelihood estimation approach (MLLS).

### Summary of the disclosure

The purpose of the present invention is to overcome all or some of the limitations of the prior art solutions, particularly those outlined here above, by providing a classification solution that responds to the problem of prior shift adaptation, while allowing to consider inconsistent estimates for the probabilities of classifier decisions as well as for the confusion matrix of said classifier. The solution of the invention goes even further by making it possible to consider estimated confusion matrices that are singular when adapting a classifier because of prior shift.

To this end, and according to a first aspect, the invention relates to a computer-implemented method for classifying data of an unlabelled set E into classes c[k], k ranging from 1 to K, said data being images or features extracted from images and a class identifying an object contained in the images. Said method comprises the steps of:
- obtaining an automatic classifier f_{T} trained with a training set T to classify data in said classes c[k] and associated with an estimated confusion matrix M', sets T and E being distinct from each other and also having the same within-class probability density for each class c[k],
- determining a vector P1 whose each component P1[k] corresponds to an estimate of the a priori probability of the class c[k] in set E, the vector P1 being determined so as to satisfy the following constraints: ${\sum }_{k = 1}^{K} P 1 \left[k\right] = 1 and ∀ k = 1 , … , K , P 1 \left[k\right] \geq 0$ as well as to maximize at least a quantity A1 given by: $A 1 = {\sum }_{k = 1}^{K} n \left[k\right] \times log \left(M′\left[k,:\right]⋅P1\right)$ where M'[k,:] is the k-th row of the matrix M', and n[k] is the number of data of set E to which the classifier f_{T} assigns the class c[k] with a maximum probability,
- updating the classifier f_{T} using the vector P1, so as to obtain an updated classifier F_{T},
- classifying the data of set E using the updated classifier F_{T}.

The classification method according to the invention therefore proposes a solution to the prior shift adaptation problem by determining the vector P1 which can then be used to update the classifier f_{T}.

The way in which vector P1 is determined allows handling the known issue of existing methods based on confusion matrices, and where inconsistent estimates of decision probabilities and confusion matrices can result in negative values in the estimated priors.

More precisely, the invention deals with this issue by constrained maximization of the likelihood of classifier decisions on the set E. In this way, and although the estimates are possibly inconsistent, a solution may be provided under the constraint of imposing positive values for the probabilities.

In addition, by searching the vector P1 with a maximization of said at least quantity A1, the classification method according to the invention consistently improves results in terms of classification accuracy as the inventors have noticed through different application examples.

The classification method further comprises the steps of:
- determining, for each datum x of set E, a vector P2_x whose each component P2_x[k] corresponds to the a posteriori probability, obtained with the classifier f_{T}, that said datum x belongs to the class c[k],
- determining a vector P3 whose each component P3[k] corresponds to an estimate of the a priori probability of the class c[k] in set T,
and wherein the update step comprises for each datum x of set E:
- a determination of a vector P4_x whose each component P4_x[k] is given by: $P 4 _ x \left[k\right] = {\left[{\sum }_{k = 1}^{K} P 2 _ x \left[k\right] \times \frac{P 1 \left[k\right]}{P 3 \left[k\right]}\right]}^{- 1} \times P 2 _ x \left[k\right] \times \frac{P 1 \left[k\right]}{P 3 \left[k\right]}$
- an update of the vector P2_x, such that each updated component P2_x[k] is set equal to P4_x[k].

Even if the retraining of the classifier f_{T} makes it possible to solve the prior shift problem, to process inconsistent data (decision probabilities, confusion matrices) and to provide good results in terms of classification accuracy, the inventors have found that adaptation of the original classifier (i.e. update of the vector P2_x) typically performs better than retraining the classifier with sampling matching the shift, and is significantly computationally cheaper.

According to particular embodiments, each component P3[k] is estimated to be equal to the proportion of class membership c[k] in set T.

According to particular embodiments, each component P3[k] is estimated to be equal to the average of the predictions made on set T using the classifier f_{T}.

According to particular embodiments, each component P3[k] is estimated to be equal to the average of the predictions made on a validation set V using the classifier f_{T}, the training set T and the validation set V being from a same probability distribution.

According to particular embodiments, the probability distribution of the vector P1 is modelled by a symmetrical Dirichlet distribution, the vector P1 also being determined so as to maximise a quantity A2 corresponding to the logarithm of said symmetrical Dirichlet distribution.

Such features are derived from reference [4] as explained in more detail later. In any case, the inventors have found that the combination of these features with maximising said quantity A1 leads to better results in terms of classification accuracy than those obtained on the basis of the estimation methods (Maximum A Posteriori estimation) described in reference [4] alone.

According to particular embodiments, the matrix M' is a soft confusion matrix (see reference [3] as explained in more detail later).

Considering a soft confusion matrix improves the results in terms of classification accuracy.

According to a second aspect, the invention also relates to a computer program including instructions for executing a classification method according to the invention when said program is executed by a computer.

This program can use any programming language and take the form of source code, object code or a code intermediate between source code and object code, such as a partially compiled form, or any other desirable form.

According to a third aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

According to a fourth aspect, the invention also relates to a device for classifying data of an unlabelled set E into classes c[k], k ranging from 1 to K, said data being images or features extracted from images and a class identifying an object contained in the images. Said device is configured to perform a classification method according to the invention.

### Brief description of the drawings

How the present disclosure may be put into effect will now be described by way of example with reference to the appended drawings, in which:
- Figure 1 illustrates a particular embodiment of a classification device according to the invention,
- Figure 2 illustrates an example of the hardware architecture of said classification device,
- Figure 3 is a flowchart of the main steps of a classification method according to the invention,
- Figure 4 illustrates a first particular embodiment of the classification method of Figure 3,
- Figure 5 illustrates a second particular embodiment of the classification method of Figure 3.

### Description of the embodiments

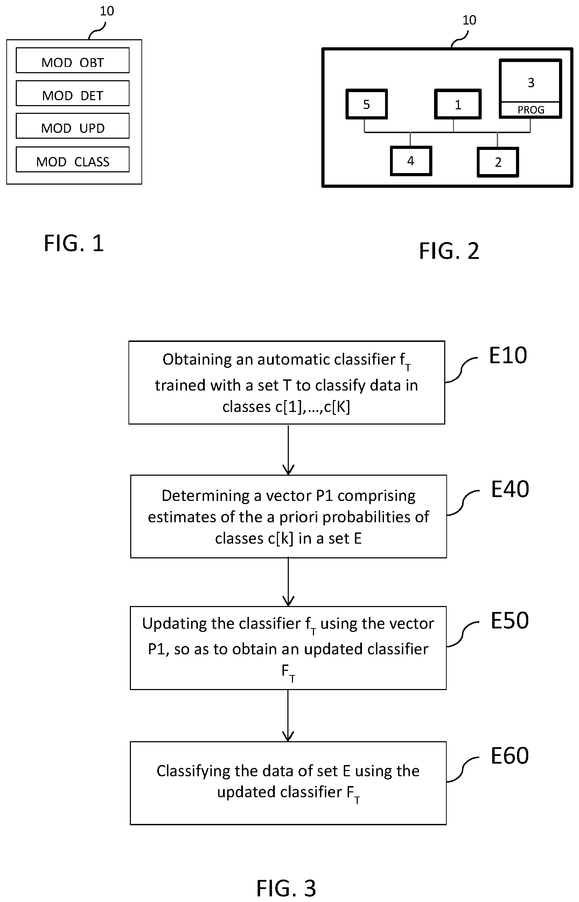

Figure 1 illustrates a particular embodiment of a device 10 according to the invention. Said device 10 is configured to classify data and is referred as "classification device" hereafter.

The classification device 10 is based on (i.e. uses) an automatic classifier f_{T} (e.g. a classification model or function f_{T}) which has been trained with a training (labelled) set T to classify data in given classes c[k], k ranging from 1 to K. Said number K is fixed here and no limitation is attached to its value.

According to the invention, the classifier f_{T} is associated with a matrix M' which corresponds to an estimation of the true confusion matrix of said classifier f_{T}.

For example, the matrix M' is a soft confusion matrix. In other words, the k-th column of the matrix M', i.e. M'[:,k], is given by: $M ′ \left[:,k\right] = \frac{1}{{N}_{k}} {\sum }_{{x}_{i} : {y}_{i} = c \left[k\right]} {f}_{T} \left({x}_{i}\right)$ where:
- {xᵢ,yᵢ} are the labelled data of set T (xᵢ is an observation and yᵢ is the class associated to said observation xᵢ in set T),
- Nₖ is the number of observations whose label corresponds to class c[k] in set T (i.e. the sum over k of all Nₖ is equal to the cardinal number of set T),
- "xᵢ:yᵢ=c[k]" is a notation indicating that the sum is performed for observations xᵢ whose labels correspond to class c[k] in set T.

For more details on the concept of soft confusion matrix, reference [3] can be consulted.

However, nothing excludes considering a matrix M' which is different from a soft confusion matrix. In general, the man skilled in the art knows how to determine a matrix M' corresponding to an estimate of the true confusion matrix associated with the classifier f_{T}.

The purpose of the invention is to solve the problem of prior shift adaptation when data of an unlabelled set E (i.e. set E is a test set) are to be classified into said classes c[k] by the classification device 10.

According to the invention, sets T and E are distinct from each other. Moreover, sets T and E have the same within-class probability density for each class c[k] (i.e. the observation properties of each class c[k] remain unchanged between set T and set E).

The rest of the description is aimed more specifically at a classifier f_{T} trained and learned by means of a neural network. The invention remains applicable whatever the nature of the neural network considered (convolutional, perceptron, autoencoder, recurrent, etc.), in particular for any deep neural network.

It should be noted, however, that no limitation is attached to the learning technique used to obtain the classifier f_{T}. Any technique implementing machine learning and providing as output estimates of the a posteriori probabilities of the classes c[k] (still referred to as "score" in the following) given the observation can be considered in the context of the invention (e.g. Support Vector Machines, logistic regression, etc.). In a nutshell, the classification device 10 (and therefore a classification method implemented by the device 10, as described in more detail below) is agnostic with respect to the learning technique under consideration.

In the same way, any appropriate training criterion known to the man skilled in the art may be used in the training of said classifier f_{T}, such as the least-squares error or the cross-entropy minimization.

In addition, no limitation is attached to the kind of data that may be processed by the classifier f_{T}. In the same way, no limitation is attached to the kind of classification that may be output based on the input (i.e. nature of the classes c[k] is not a limiting factor of the invention).

For example, if the inputs to the classifier f_{T} are images or features that have been extracted from images, the output generated by the classifier f_{T} for a given image may be an estimate of the a posteriori probability that the image contains an image of an object belonging to given classes. Specifically, these may include, for example, images of road traffic taken by an autonomous vehicle, so that it can be determined whether vehicles in the image are at risk of collision.

According to another example, if the inputs to the classifier f_{T} are Internet resources (e.g., web pages), documents, or portions of documents or features extracted from Internet resources, the output generated by the classifier f_{T} for a given Internet resource, document, or portion of a document may be a score for each of a set of topics, with each score thus representing an estimate of the a posteriori probability that the Internet resource, document, or document portion is about the topic.

According to another example, if the inputs to the classifier f_{T} are features of an impression context for a particular advertisement, the output generated by the classifier f_{T} may be a score that represents an estimate of the a posteriori probability that the particular advertisement will be clicked on.

According to another example, if the inputs to the classifier f_{T} are features of a personalized recommendation for a user, e.g., features characterizing the context for the recommendation, e.g., features characterizing previous actions taken by the user, the output generated by the classifier f_{T} may be a score for each of a set of content items, with each score representing an estimate of the a posteriori probability that the user will respond favourably to being recommended the content item.

According to another example, if the input to the classifier f_{T} is text in one language, the output generated by the classifier f_{T} may be a score for each of a set of pieces of text in another language, with each score representing an estimate of the a posteriori probability that the piece of text in the other language is a proper translation of the input text into the other language.

According to another example, if the input to the classifier f_{T} is a spoken utterance, a sequence of spoken utterances, or features derived from one of the two, the output generated by the classifier f_{T} may be a score for each of a set of pieces of text, each score representing an estimate of the a posteriori probability that the piece of text is the correct transcript for the utterance or sequence of utterances.

In general, the invention can find an application in any industrial and technical field where classification tasks have to be carried out. Examples of other typical technical applications of a classification algorithm may include, without limitation: classification of digital images (e.g. in health care, for example cardiac monitoring in order to detect irregular beats of a patient), video and audio or voice signals based on low-level characteristics (e.g. contours or pixel attributes for images).

The classification device 10 is configured to perform processing to improve the accuracy of classifying unlabelled data from set E, even in the presence of inconsistent estimates for decision probabilities and confusion matrix, by implementing a method for classifying data. Said method is referred to as "classification method" hereafter.

By "improving the accuracy of classification", reference is made here to obtaining classification results that are more accurate than if the classifier f_{T} is not adapted to address prior shift.

Figure 2 illustrates an example of the hardware architecture of the classification device 10 for the implementation of the classification method according to the invention.

To this end, the classification device 10 has the hardware architecture of a computer. As shown in Figure 2, the classification device 10 comprises, in particular, a processor 1, a random access memory 2, a read-only memory 3, a non-volatile memory 4 and communication means 5.

The read-only memory 3 of the classification device 10 constitutes a recording medium conforming to the invention, which is readable by processor 1 and on which is recorded a computer program PROG conforming to the invention, containing instructions for carrying out the steps of the classification method according to the invention. The program PROG defines functional modules of the classification device 10, which are based on or control the aforementioned elements 1 to 5 of the classification device 10, and which comprise in particular:
- an obtaining module MOD_OBT, configure to obtain said automatic classifier f_{T},
- a determination module MOD_DET, configured to determine a vector P1 whose each component P1[k] corresponds to an estimate of the a priori probability of the class c[k] in set E,
- an updating module MOD_UPD, configured to update the classifier f_{T} using the vector P1,
- a classification module MOD_CLASS, configured to classify the data of set E using the updated classifier f_{T}.

The functionalities attached to each of the modules are explained in detail later on when describing modes of implementation of said classification method.

In a particular embodiment, the classifier f_{T} (i.e. the code instructions defining said classifier f_{T}) is learned (i.e. trained using data set T) prior to the implementation of the classification method, and is previously stored in a memory of the classification device 10, such as the non-volatile memory 4. In other words, in said particular embodiment, the obtaining module MOD_OBT is integrated to the communication means 5 and corresponds to hardware and/or software means configured to give processor 1 access to the classifier f_{T} in order to perform steps of the classification method (i.e. no steps dedicated to learning and training the classifier f_{T} from set T are included in the classification method). For example, the obtaining module MOD_OBT may include a computer bus connecting processor 1 to the non-volatile memory 4.

In an alternative embodiment, said neural network is initially stored in a memory equipping an entity external to the classification device 10 (e.g.: database server). Therefore, in this alternative embodiment, the obtaining module MOD_OBT is integrated to the communication means 5 and configured to obtain the classifier f_{T}. In other words, the classifier f_{T} (i.e. the code instructions defining said classifier f_{T}) is obtained via a data exchange (transmission/reception) controlled by the obtaining module MOD_OBT and carried out by the communication means 5 of the classification device 10 as well as by communication means suitable for transmission equipping said external entity. Such an exchange of data between the obtaining module MOD_OBT and said external entity is carried out via a communication interface. No limitation is attached to the nature of this communication interface, which may be wired or non-wired, and may implement any protocol known to the man skilled in the art (Ethernet, Wi-Fi, Bluetooth, 3G, 4G, 5G, etc.).

In yet another alternative embodiment, the obtaining module MOD_OBT corresponds to hardware and/or software means configured to learn and train the classifier f_{T} from the set T. In other words, in this other alternative embodiment, the classification device 10 includes means known to the man skilled in the art and configured to generate the classifier f_{T} from set T (i.e. the classification method includes one or more steps dedicated to learning and training the classifier f_{T} from set T).

In general, no limitation is attached to the way in which classification device 10 obtains the classifier f_{T}.

For the rest of the description, it is now considered in a non-limitative way that the classifier f_{T}, learned and trained by means of set T, is stored in a memory equipping an entity external to the classification device 10 prior to the implementation of the classification method.

In its general principle, the classification method according to the invention aims at proposing a novel procedure for prior estimation based on maximizing the likelihood of classifiers decisions, which handles inconsistent estimate of classifier f_{T} decisions probabilities as well as inconsistent (and even singular) matrix M'.

Figure 3 is a flowchart of the main steps of the classification method according to the invention, these steps being carried out by the classification device 10.

As shown in Figure 3, the classification method comprises a step E10 of obtaining the classifier f_{T}. This obtaining step E10 is performed by the obtaining module MOD_OBT of the classification device 10.

In accordance with the features henceforth considered for the obtaining module MOD_OBT, step E10 thus includes a reception of the classifier f_{T} from the external entity initially storing said classifier f_{T}.

Once step E10 has been performed, the classifier f_{T} is stored in a memory of the classification device 10 and the classification method also comprises a step E40 of determining the vector P1. This determination step E40 is performed by the determination module MOD_DET of the classification device 10.

According to the invention, the vector P1 is determined so as to satisfy the following constraints: ${\sum }_{k = 1}^{K} P 1 \left[k\right] = 1 and ∀ k = 1 , … , K , P 1 \left[k\right] \geq 0$ as well as to maximize a quantity A1 given by: $A 1 = {\sum }_{k = 1}^{K} n \left[k\right] \times log \left(M′\left[k,:\right]⋅P1\right)$ where M'[k,:] is the k-th row of the matrix M', and n[k] is the number of data of set E to which the classifier f_{T} assigns the class c[k] with a maximum probability (e.g. n[1],..., n[K] are the numbers of classifier f_{T} decisions for classes c[1],..., c[K] on set E). For the rest of the description, the vector whose components are n[1],..., n[K] is designated by n.

The fact that the vector P1 corresponds to an estimate of the a priori probability of the classes c[1],..., c[K] in set E results from the following considerations.

Let us denote by Q = (Q[1],..., Q[K]) the vector corresponding to the probabilities of classifier f_{T} decisions on the target distribution (i.e. the distribution p_{E}(X,Y) where X is the feature space and Y the label space for set E). In other words, Q corresponds to the vector p_{E}(D) as mentioned above in connection with equation (1).

In a very conventional way in terms of supervised learning, classifier f_{T} decisions on set E are assumed to be independent. Hence, the likelihood of Q follows by the multinomial distribution: $L \left(Q\right) = p \left(\left.n\right|Q\right) = \frac{\left({n}_{1}+⋯+{n}_{K}\right) !}{{n}_{1} ! \times … \times {n}_{K} !} \times {{q}_{1}}^{{n}_{1}} \times … \times {{q}_{K}}^{{n}_{K}}$ where p(.) classically denotes the probability of the event between brackets.

Substituting equation (1) into the likelihood function L(Q), the likelihood function of class priors P (i.e. P corresponds to the vector p_{E}(Y) as mentioned above in connection with equation (1)) can be expressed as follows: $L \left(P\right) = p \left(\left.n\right|P\right) = \frac{\left({n}_{1}+⋯+{n}_{K}\right) !}{{n}_{1} ! \times … \times {n}_{K} !} {\prod }_{k = 1}^{K} {\left(M′\left[k,:\right]⋅P\right)}^{{n}_{K}}$

It follows from the above that the log-likelihood I(P) of P is given by: $l \left(P\right) = log p \left(\left.n\right|P\right) = {\sum }_{k = 1}^{K} n \left[k\right] log \left(M′\left[k,:\right]⋅P\right) + θ \left(n\right)$ where θ(n) is a constant for a fixed vector n.

A priori probabilities estimates of the classes c[1],..., c[K] in set E are thus obtained by searching for P1 satisfying the following equation: $P 1 = {argmax}_{P} {\sum }_{k = 1}^{K} n \left[k\right] log \left(M′\left[k,:\right]⋅P\right)$

Such a constrained optimization problem can be solved by using a projected gradient descent. However, the choice of a projected gradient descent method is only a variant of the implementation of the invention, and any method of solving such optimization problem known to the man skilled in the art may be used.

Once the vector P1 has been determined, the classification method also comprises a step E50 of updating the classifier f_{T} using the vector P1, so as to obtain an updated classifier F_{T}. This updating step E50 is performed by the updating module MOD_UPD of the classification device 10.

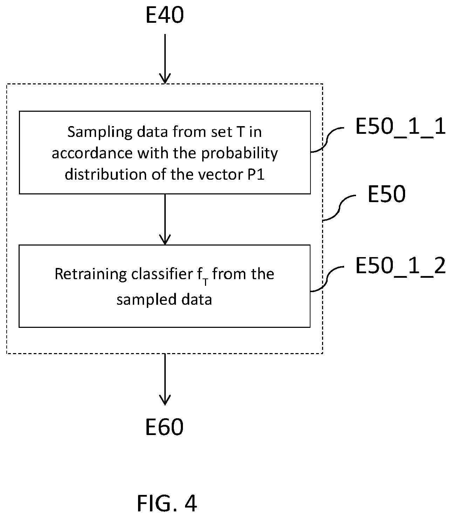

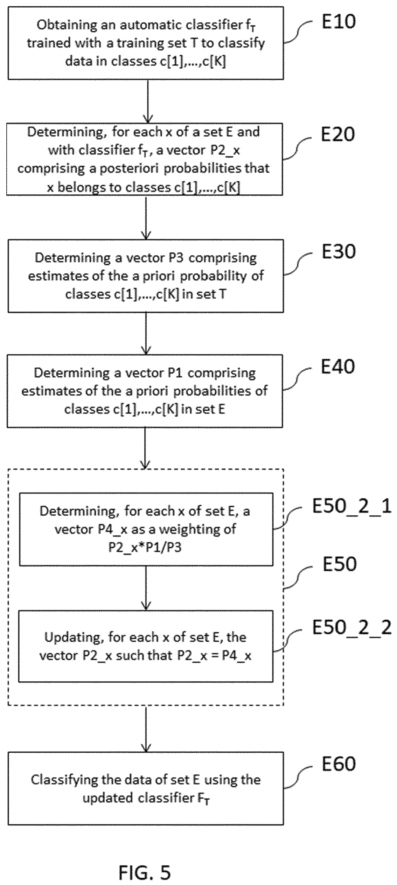

The updating of the classifier f_{T} can be carried out according to different embodiments of the classification method which are described in detail below (with references to figures 4 and 5).

The classification method also comprises a step E60 of classifying the data of set E using the updated classifier F_{T}. This classification step E60 is performed by the classification module MOD_CLASS of the classification device 10.

Figure 4 illustrates a first particular embodiment of the classification method of Figure 3.

As shown in Figure 4, the updating step E50 comprises, in said first particular embodiment, a substep E50_1_1 of sampling data from set T, such that the sampled data are labelled in accordance with the probability distribution of the vector P1 (i.e. sampling is performed following P1).

Moreover, the updating step E50 also comprises, in said first particular embodiment, a substep E50_1_2 of retraining the classifier f_{T} from the sampled data. In this way, the updated classifier F_{T} corresponds to the classifier f_{T} once retrained.

Thus, in said first particular embodiment of Figure 4, adaptation to prior shift is tackled by retraining the classifier f_{T} with adjusted training sample weights (i.e. with training sampling matching the prior shift).

Figure 5 illustrates a second particular embodiment of the classification method of Figure 3.

The implementation of this second particular embodiment is based on the fact that it is possible to reweight the predictions of the classifier f_{T} by adapting it to the new a priori probabilities defined by vector P1.

To proceed in this way, and according to said second particular embodiment, the classification method further comprises a step E20 of determining, for each datum (e.g. observation) x of set E, a vector P2_x whose each component P2_x[k] corresponds to the a posteriori probability, obtained with the classifier f_{T}, that said datum x belongs to the class c[k]. Otherwise said, datum x is scored by classifier f_{T} and P2_x corresponds to the image of x by said classifier f_{T}, i.e. f_{T}(x).

According to said second particular embodiment, the classification method further comprises a step E30 of determining a vector P3 whose each component P3[k] corresponds to an estimate of the a priori probability of the class c[k] in set T.

For example, each component P3[k] is estimated to be equal to the proportion of class membership c[k] in set T, i.e. P3[k]=Nₖ/N_{T} where Nₖ is the number of observations whose label corresponds to class c[k] in set T and N_{T} is the cardinal number of set T.

According to another example, each component P3[k] is estimated to be equal to the average of the predictions made on set T using the classifier f_{T}, i.e. $P 3 \left[k\right] = \frac{1}{{N}_{T}} {\sum }_{x ∈ T} {f}_{T} \left(x\right) \left[k\right]$

According to yet another example, each component P3[k] is estimated to be equal to the average of the predictions made on a validation set V using the classifier f_{T}, the training set T and the validation set V being from a same probability distribution , i.e. $P 3 \left[k\right] = \frac{1}{{N}_{V}} {\sum }_{x ∈ V} {f}_{T} \left(x\right) \left[k\right]$ where N_{V} is the cardinal number of the validation set V. This is a preferred example of implementation of the invention as the inventors have indeed found that the best results in terms of precision were achieved when a priori probabilities P3 in set T are estimated from predictions such a validation set V.

According to said second particular embodiment, and as shown in Figure 5, the update step E50 also comprises for each datum x of set E:
- a substep E50_2_1 of determining a vector P4_x whose each component P4_x[k] is given by: $P 4 _ x \left[k\right] = {\left[{\sum }_{k = 1}^{K} P 2 _ x \left[k\right] \times \frac{P 1 \left[k\right]}{P 3 \left[k\right]}\right]}^{- 1} \times P 2 _ x \left[k\right] \times \frac{P 1 \left[k\right]}{P 3 \left[k\right]}$
- a substep E50_2_2 of updating the vector P2_x, such that each updated component P2_x[k] is set equal to P4_x[k].

It should be noted that the expression of P4_x[k] results from the use of Bayes' theorem in combination with the fact that sets T and E have the same within-class probability density for each class c[k]. For details on this calculation, it is possible to consult reference [2] for example.

It therefore follows from the above that, according to said second particular embodiment, the updated classifier F_{T} is the one providing as a posteriori probabilities for set E the probabilities of the vectors P4_x. In other words, the classifier F_{T} corresponds to a weighting of the classifier f_{T} (i.e. of the a posteriori probabilities P2_x) taking into account the a priori probabilities P1.

It should be noted that steps E20 and E30 have been described as being implemented before steps E40 to E60 in said second particular embodiment. However, this is only an example of implementation, and other examples are of course possible as long as the vectors P1, P2_x and P3 have been determined before the implementation of the update step E50.

The invention has been described so far considering that the determination of the vector P1 is carried out by maximising only the quantity A1. However, other embodiments are still possible in which the quantity A1 is not the only one to be maximised in order to determine the vector P1.

For example, it is possible to consider an embodiment in which the probability distribution of the vector P1 is modelled by a symmetrical Dirichlet distribution. Thus, according to this example, the vector P1 is determined so as to maximise the quantity A1 but also a quantity A2 corresponding to the logarithm of said symmetrical Dirichlet distribution.

Regarding the use and implementation of such symmetrical Dirichlet distribution, the man skilled in the art can consult reference [4]. As explained in reference [4], such a symmetric Dirichlet distribution, also called "hyper-prior" for the present case because it represents additional knowledge about class priors distribution P, is defined as a function of a parameter α that characterizes the density of P. Thus, for 0 < α < 1, P is sparse, while for α > 1 it is the opposite. For example, α may be chosen as equal to 3.

The feature of such an embodiment can be formulated mathematically using the notations introduced above to describe step E40 of Figure 3. More particularly, maximum-a-posteriori estimation is written as follows: $P 1 = {argmax}_{P} p \left(\left.P\right|n\right) = {argmax}_{P} p \left(P\right) p \left(\left.n\right|P\right)$ or equivalently $P 1 = {argmax}_{P} log p \left(P\right) + {argmax}_{P} log p \left(\left.n\right|P\right)$ Here, p(P) stands for the symmetric Dirichlet distribution (said quantity A2 is thus equal to log p(P)) and log(n|P) is log-likelihood I(P) whose expression has been detailed above.

Of course, this is only a possible implementation of the invention, and other distributions, different from said Dirichlet distribution, may be also considered.

The invention has also been described so far considering that the classifier f_{T} corresponds to a neural network. In this respect, any method for improving the accuracy of the predictions provided at the output of this neural network can be implemented by the invention. For example, the classifier f_{T} can be calibrated according to the "TS" (i.e. "temperature scaling") method (see reference [5]), or according to the "BCTS" (i.e. "Bias-Corrected Temperature Scaling") method (see reference [6]).

Finally, beyond the fact that the invention makes it possible to consider inconsistent estimates for the probabilities of classifier decisions as well as for the confusion matrix of said classifier, it also makes it possible to improve the accuracy of classification.

By way of example, a ResNet-32 classifier f_{T} has been trained on the CIFAR100 training set, with a result of 63.83% accuracy achieved on a long-tailed test set, denoted CIFAR100-LT-test. Thereafter, said classifier f_{T} has been calibrated with BCTS method, and each component P1[k] has been estimated from predictions of the classifier f_{T} on the test set CIFAR100-LT-test, using a soft confusion matrix estimated on a validation set. The predictions of the classifier f_{T} have been adapted according to equation (1) (i.e. second particular embodiment described above with reference to Figure 5). As a final result, the classification accuracy improved to 69.38%.

### References:

[1] "Discriminant Analysis and Statistical Pattern Recognition", Geoffrey J. McLachlan, John Wiley & Sons, Inc, Hoboken, NJ, USA, 1992-03-27.
[2] "Adjusting the outputs of a classifier to new a priori probabilities: A simple procedure", Marco Saerens, Patrice Latinne, and Christine Decaestecker. Neural Comput., 14(1):21-41, Jan. 2002.
[3] "Detecting and correcting for label shift with black box predictors", Zachary C. Lipton, Yu-Xiang Wang, and Alex Smola, ArXiv, 1802.03916v3, 2018.
[4] "Improving cnn classifiers by estimating test-time priors", Milan Sulc and Jiri Matas, In Proceedings of the IEEE/CVF International Conference on Computer Vision (ICCV) Workshops, Oct 2019.
[5] "On calibration of modern neural networks", Chuan Guo, Geoff Pleiss, Yu Sun, and Kilian Q Weinberger, In International Conference on Machine Learning, pages 1321-1330, 2017.
[6] "Maximum likelihood with bias-corrected calibration is hard-to-beat at label shift adaptation", Amr Alexandari, Anshul Kundaje, and Avanti Shrikumar, ArXiv, 1901.06852v5, 2019.
[7] "A Unified View of Label Shift Estimation", Saurabh Garg, Yifan Wu, Sivaraman Balakrishnan, Zachary C. Lipton, arXiv:2003.07554v3, 2020.

## Claims

1. A computer-implemented method for classifying data of an unlabelled set E into classes c[k], k ranging from 1 to K, said data being images or features extracted from images and a class identifying an object contained in the images, the method comprising the steps of:
- obtaining (E10) an automatic classifier f_{T} trained with a training set T to classify data in said classes c[k] and associated with an estimated confusion matrix M', said matrix M' being a soft confusion matrix, sets T and E being distinct from each other and also having the same within-class probability density for each class c[k],
- determining (E40) a vector P1 whose each component P1[k] corresponds to an estimate of the a priori probability of the class c[k] in set E, the vector P1 being determined so as to satisfy the following constraints: ${\sum }_{k = 1}^{K} P 1 \left[k\right] = 1 and ∀ k = 1 , … , K , P 1 \left[k\right] \geq 0$
as well as to maximize at least a quantity A1 given by: $A 1 = {\sum }_{k = 1}^{K} n \left[k\right] \times log \left(M′\left[k,:\right]⋅P1\right)$
where M'[k,:] is the k-th row of the matrix M', and n[k] is the number of data of set E to which the classifier f_{T} assigns the class c[k] with a maximum probability,
wherein said maximization of A1 determines P1 by a constrained optimization process, said constrained optimization process being performed by projected gradient descent,
and wherein the method further comprises:
- determining (E20), for each datum x of set E, a vector P2_x whose each component P2_x[k] corresponds to the a posteriori probability, obtained with the classifier f†, that said datum x belongs to the class c[k],
- determining (E30) a vector P3 whose each component P3[k] corresponds to an estimate of the a priori probability of the class c[k] in set T; and
- updating (E50) the classifier f_{T} using the vector P1, so as to obtain an updated classifier F†,
wherein the updating step (E50) comprises for each datum x of set E:
- a determination (E50_2_1) of a vector P4_x whose each component P4_x[k] is given by: $P 4 _ x \left[k\right] = {\left[{\sum }_{k = 1}^{K} P 2 _ x \left[k\right] \times \frac{P 1 \left[k\right]}{P 3 \left[k\right]}\right]}^{- 1} \times P 2 _ x \left[k\right] \times \frac{P 1 \left[k\right]}{P 3 \left[k\right]}$
- an update (E50_2_2) of a vector P2_x, such that each updated component P2_x[k] is set equal to P4_x[k],and
- an obtention of an updated classifier F_{T} providing as a posteriori probabilities for set E, the probabilities of the vectors *P*4_*x,* said updated classifier F_{T} corresponding to a weighting of the classifier f_{T} taking into account the a priori probabilities P1,
- classifying (E60) the data of set E using the updated classifier F_{T}.

2. The method according to claim 1, wherein each component P3[k] is estimated to be equal to the proportion of class membership c[k] in set T.

3. The method according to claim 1, wherein each component P3[k] is estimated to be equal to the average of the predictions made on set T using the classifier f_{T}.

4. The method according to claim 1, wherein each component P3[k] is estimated to be equal to the average of the predictions made on a validation set V using the classifier f_{T}, the training set T and the validation set V being from a same probability distribution.

5. The method according to any one of claims 1 to 4, wherein the probability distribution of the vector P1 is modelled by a symmetrical Dirichlet distribution, the vector P1 also being determined so as to maximise a quantity A2 corresponding to the logarithm of said symmetrical Dirichlet distribution.

6. A computer program including instructions for executing the steps of a classification method according to any one of claims 1 to 5 when said program is executed by a computer.

7. A recording medium readable by a computer and having recorded thereon a computer program according to claim 6.

8. A device (10) for classifying data of an unlabelled set E into classes c[k], k ranging from 1 to K, said data being images or features extracted from images and a class identifying an object contained in the images, said device (10) being configured to perform a classification method according to any of claims 1 to 5.

## Patentansprüche

1. Computerumgesetztes Verfahren zur Klassifizierung der Daten einer nicht gekennzeichneten Menge E in Klassen c[k], wobei k von 1 bis K reicht, wobei die Daten Bilder oder aus Bildern extrahierte Merkmale sind und eine Klasse ein Objekt identifiziert, das in den Bildern enthalten ist, wobei das Verfahren folgende Schritte umfasst:
- Erzielen (E10) eines automatischen Klassifizierers f_{T}, der mit einer Trainingsmenge T trainiert wird, um die Daten in den Klassen c[k] zu klassifizieren, und einer geschätzten Konfusionsmatrix M' zugeordnet ist, wobei die Matrix M' eine Soft-Konfusionsmatrix ist, wobei die Mengen T und E voneinander getrennt sind und auch die gleiche klasseninterne Wahrscheinlichkeitsdichte für jede Klasse c[k] aufweisen,
- Bestimmen (E40) eines Vektors P1, von dem jede Komponente P1[k] einer Schätzung der A-priori-Wahrscheinlichkeit der Klasse c[k] in der Menge E entspricht, wobei der Vektor P1 derart bestimmt wird, dass er die folgenden Auflagen erfüllt: ${\sum }_{k = 1}^{K} P 1 \left[k\right] = 1 und ∀ k = 1 , … , K , P 1 \left[k\right] \geq 0$
und auch mindestens eine Größe A1 maximiert, die gegeben ist durch: $A 1 = {\sum }_{k = 1}^{K} n \left[k\right] \times log \left(M′\left[k,:\right]⋅P1\right)$
wobei M'[k,:] die k-te Reihe der Matrix M' ist, und n[k] die Anzahl der Daten der Menge E ist, denen der Klassifizierer f_{T} die Klasse c[k] mit einer höchsten Wahrscheinlichkeit zuteilt,
wobei das Maximieren von A1 P1 durch einen eingeschränkten Optimierungsprozess bestimmt, wobei der eingeschränkte Optimierungsprozess durch projizierten Gradientenabstieg erfolgt,
und wobei das Verfahren ferner umfasst:
- Bestimmen (E20), für jedes Datenelement x der Menge E, eines Vektors P2_x, von dem jede Komponente P2_x[k] der A-posteriori-Wahrscheinlichkeit entspricht, die mit dem Klassifizierer f_{T} erzielt wird, dass das Datenelement x zu der Klasse c[k] gehört,
- Bestimmen (E30) eines Vektors P3, von dem jede Komponente P3[k] einer Schätzung der A-priori-Wahrscheinlichkeit der Klasse c[k] in der Menge T entspricht; und
- Aktualisieren (E50) des Klassifizierers f_{T} unter Verwendung des Vektors P1, um einen aktualisierten Klassifizierer F† zu erzielen,
wobei der Aktualisierungsschritt (E50) für jedes Datenelement x der Menge E umfasst:
- Bestimmen (E50_2_1) eines Vektors P4_x, von dem jede Komponente P4_x[k] gegeben ist durch: $P 4 _ x \left[k\right] = {\left[{\sum }_{k = 1}^{K} P 2 _ x \left[k\right] \times \frac{P 1 \left[k\right]}{P 3 \left[k\right]}\right]}^{- 1} \times P 2 _ x \left[k\right] \times \frac{P 1 \left[k\right]}{P 3 \left[k\right]}$
- Aktualisieren (E50_2_2) eines Vektors P2_x, so dass jede aktualisierte Komponente P2_x[k] gleich P4_x[k] eingestellt wird, und
- Erzielen eines aktualisierten Klassifizierers F_{T}, der als A-posteriori-Wahrscheinlichkeiten für die Menge E die Wahrscheinlichkeiten der Vektoren P4_x bereitstellt, wobei der aktualisierte Klassifizierer F_{T} einer Gewichtung des Klassifizierers f_{T} entspricht, welche die A-priori-Wahrscheinlichkeiten P1 berücksichtigt,
- Klassifizieren (E60) der Daten der Menge E unter Verwendung des aktualisierten Klassifizierers F_{T}.

2. Verfahren nach Anspruch 1, wobei von jeder Komponente P3[k] geschätzt wird, dass sie gleich dem Anteil der Klassenzugehörigkeit c[k] in der Menge T ist.

3. Verfahren nach Anspruch 1, wobei von jeder Komponente P3[k] geschätzt wird, dass sie gleich dem Durchschnitt der Vorhersagen ist, die für die Menge T unter Verwendung des Klassifizierers f_{T} erfolgten.

4. Verfahren nach Anspruch 1, wobei von jeder Komponente P3[k] geschätzt wird, dass sie gleich dem Durchschnitt der Vorhersagen ist, die für eine Validierungsmenge V unter Verwendung des Klassifizierers f_{T} erfolgten, wobei die Trainingsmenge T und die Validierungsmenge V aus der gleichen Wahrscheinlichkeits¬verteilung stammen.

5. Verfahren nach einem der Ansprüche 1 bis 4, wobei die Wahrscheinlichkeitsverteilung des Vektors P1 durch eine symmetrische Dirichlet-Verteilung modelliert wird, wobei der Vektor P1 ebenfalls derart bestimmt wird, dass er eine Größe A2 maximiert, die dem Logarithmus der symmetrischen Dirichlet-Verteilung entspricht.

6. Computerprogramm, umfassend Anweisungen zum Ausführen der Schritte eines Klassifizierungsverfahrens nach einem der Ansprüche 1 bis 5, wenn das Programm von einem Computer ausgeführt wird.

7. Aufzeichnungsmedium, das durch einen Computer lesbar ist, und auf dem ein Computerprogramm nach Anspruch 6 aufgezeichnet ist.

8. Vorrichtung (10) zur Klassifizierung der Daten einer nicht gekennzeichneten Menge E in Klassen c[k], wobei k von 1 bis K reicht, wobei die Daten Bilder oder aus Bildern extrahierte Merkmale sind und eine Klasse ein Objekt identifiziert, das in den Bildern enthalten ist, wobei die Vorrichtung (10) dazu konfiguriert ist, ein Klassifizierungsverfahren nach einem der Ansprüche 1 bis 5 auszuführen.

## Revendications

1. Procédé mis en œuvre par ordinateur pour classer les données d'un ensemble E non étiqueté en classes c[k], k allant de 1 à K, lesdites données étant des images ou des caractéristiques extraites d'images et une classe identifiant un objet contenu dans les images, le procédé comprenant les étapes suivantes :
- obtenir (E10) un classificateur f_{T} automatique entraîné à l'aide d'un ensemble T d'entraînement pour classer les données en lesdites classes c[k] et associé à une matrice M' de confusion estimée, ladite matrice M' étant une matrice de confusion souple, les ensembles T et E étant distincts l'un de l'autre et ayant également la même densité de probabilité intra-classe pour chaque classe c[k],
- déterminer (E40) un vecteur P1 dont chaque composante P1[k] correspond à une estimation de la probabilité a priori de la classe c[k] dans l'ensemble E, le vecteur P1 étant déterminé de manière à satisfaire les contraintes suivantes : ${\sum }_{k = 1}^{K} P 1 \left[k\right] = 1 et ∀ k = 1 , … , K , P 1 \left[k\right] \geq 0$
ainsi que pour maximiser au moins une grandeur A1 donnée par : $A 1 = {\sum }_{k = 1}^{K} n \left[k\right] \times log \left(M′\left[k,:\right]⋅P1\right)$
où M'[k, :] est la k^{ème} rangée de la matrice M', et n[k] est le nombre de données de l'ensemble E auxquelles le classificateur f_{T} attribue la classe c[k] avec une probabilité maximale,
dans lequel ladite maximisation de A1 détermine P1 par un processus d'optimisation sous contraintes, ledit processus d'optimisation sous contraintes étant réalisé par descente de gradient projetée,
et dans lequel le procédé comprend en outre les étapes suivantes :
- pour chaque donnée x de l'ensemble E, déterminer (E20) un vecteur P2_x dont chaque composante P2_x[k] correspond à la probabilité a posteriori, obtenue à l'aide du classificateur f_{T}, que ladite donnée x appartienne à la classe c[k],
- déterminer (E30) un vecteur P3 dont chaque composante P3[k] correspond à une estimation de la probabilité a priori de la classe c[k] dans l'ensemble T ; et
- mettre à jour (E50) le classificateur f_{T} à l'aide du vecteur P1, de manière à obtenir un classificateur F_{T} mis à jour,
dans lequel l'étape de mise à jour (E50) comprend, pour chaque donnée x de l'ensemble E :
- une détermination (E50_2_1) d'un vecteur P4_x dont chaque composante P4_x[k] est donnée par : $P 4 _ x \left[k\right] = {\left[{\sum }_{k = 1}^{K} P 2 _ x \left[k\right] \times \frac{P 1 \left[k\right]}{P 3 \left[k\right]}\right]}^{- 1} \times P 2 _ x \left[k\right] \times \frac{P 1 \left[k\right]}{P 3 \left[k\right]}$
- une mise à jour (E50_2_2) d'un vecteur P2_x, de sorte que chaque composante P2_x[k] mise à jour soit égale à P4_x[k], et
- l'obtention d'un classificateur F_{T} mis à jour fournissant, en tant que probabilités a posteriori pour l'ensemble E, les probabilités des vecteurs P4_x, ledit classificateur F_{T} mis à jour correspondant à une pondération du classificateur f_{T} tenant compte des probabilités a priori P1,
- classer (E60) les données de l'ensemble E à l'aide du classificateur F_{T} mis à jour.

2. Procédé selon la revendication 1, dans lequel chaque composante P3[k] est estimée comme étant égale à la proportion d'appartenance à la classe c[k] dans l'ensemble T.

3. Procédé selon la revendication 1, dans lequel chaque composante P3[k] est estimée comme étant égale à la moyenne des prédictions effectuées sur l'ensemble T à l'aide du classificateur f_{T}.

4. Procédé selon la revendication 1, dans lequel chaque composante P3[k] est estimée comme étant égale à la moyenne des prédictions effectuées sur un ensemble V de validation à l'aide du classificateur f_{T}, de l'ensemble T d'entraînement et de l'ensemble V de validation provenant d'une même distribution de probabilité.

5. Procédé selon l'une des revendications 1 à 4, dans lequel la distribution de probabilité du vecteur P1 est modélisée par une distribution de Dirichlet symétrique, le vecteur P1 étant également déterminé de manière à maximiser une grandeur A2 correspondant au logarithme de ladite distribution de Dirichlet symétrique.

6. Programme informatique comportant des instructions pour exécuter les étapes d'un procédé de classification selon l'une des revendications 1 à 5 lorsque ledit programme est exécuté par un ordinateur.

7. Support d'enregistrement lisible par un ordinateur sur lequel est enregistré un programme informatique selon la revendication 6.

8. Dispositif (10) destiné à classer les données d'un ensemble E non étiqueté en classes c[k], k allant de 1 à K, lesdites données étant des images ou des caractéristiques extraites d'images et une classe identifiant un objet contenu dans les images, ledit dispositif (10) étant configuré pour mettre en œuvre un procédé de classification selon l'une des revendications 1 à 5.
